# EUROPÄISCHE PATENTSCHRIFT

(11) **EP 2 823 109 B1**
(45) Veröffentlichungstag und Bekanntmachung des Hinweises auf die Patenterteilung: **14.11.2018**
(21) Anmeldenummer: 13713760.0
(22) Anmeldetag: 05.03.2013
(51) Int. Cl.: E03F 5/14, B01D 21/00

(54) **ABWASSERBEHANDLUNGSANORDNUNG**
GRAYWATER TREATMENT DEVICE
SYSTÈME DE TRAITEMENT DES EAUX USÉES

(30) Priorität: 05.03.2012 DE 102012203408
(43) Veröffentlichungstag der Anmeldung: 14.01.2015
(73) Patentinhaber: Fränkische Rohrwerke Gebr. Kirchner GmbH & Co., 97486 Königsberg/Bayern (DE)
(72) Erfinder: SCHÜTZ, Michael, 97475 Zeil am Main (DE); BOOGAARD, Floris, 1111 PB Diemen (NL)
(74) Vertreter: Weickmann & Weickmann PartmbB
(86) Internationale Anmeldenummer: PCT/EP2013/054345
(87) Internationale Veröffentlichungsnummer: WO 2013/131880

(56) Entgegenhaltungen:
- EP-A1- 2 226 106
- EP-A1- 2 405 063
- DE-A1- 19 916 964
- DE-U1-202005 005 946

## Beschreibung

Die Erfindung betrifft eine Abwasserbehandlungsanordnung zum zumindest teilweisen Entfernen von Fremdstoffen, die eine von der spezifischen Dichte von Wasser abweichende spezifische Dichte aufweisen, aus Abwasser, insbesondere aus Regenwasser, umfassend wenigstens ein Abwasserbehandlungsrohr, welches wenigstens einen Strömungsraum mit wenigstens einer Einströmöffnung und wenigstens einer Ausströmöffnung aufweist, wobei das Abwasser durch die wenigstens eine Einströmöffnung in den wenigstens einen Strömungsraum eintritt und nach Durchströmen des wenigstens einen Strömungsraums durch die wenigstens eine Ausströmöffnung aus dem wenigstens einen Strömungsraum wieder austritt, sowie wenigstens einen strömungsberuhigten Sammelraum aufweist, in welchem sich die zu Boden sinkenden oder/und zur Decke steigenden Fremdstoffe ansammeln, wobei der Sammelraum von dem wenigstens einen Strömungsraum über eine am Boden oder/und an der Decke des wenigstens einen Strömungsraums vorgesehene Strömungstrennwand getrennt ist, in welcher eine Mehrzahl von über die Länge des Abwasserbehandlungsrohrs verteilt angeordneten Durchtrittskanälen ausgebildet ist, die den Sammelraum mit dem wenigstens einen Strömungsraum verbinden.

Eine Abwasserbehandlungsanordnung mit einem Sedimentationsrohr ist beispielsweise aus der DE 10 2004 008 960 A1 bekannt, und eine Abwasserbehandlungsanordnung mit einem Leichtflüssigkeitsabscheiderrohr aus der EP 2 226 106 A1. Ferner offenbart die DE 10 2010 030 976 A1 eine Abwasserbehandlungsanordnung deren Abwasserbehandlungsrohre sowohl Sedimentations- als auch Leichtflüssigkeitsabscheidefunktion haben. Aus der DE 10 2010 030 976 A1 ist es ferner bekannt, eine Mehrzahl derartiger Abwasserbehandlungsrohre hintereinander anzuordnen, um die zur Abwasserbehandlung zur Verfügung stehende Abwasserbehandlungsstrecke zu erhöhen.

Ferner ist aus dem Dokument DE-A-19916964 ein Abwasserrohr bekannt, welches durch eine perforierte Trennwand in einen ersten Bereich und einen zweiten Bereich unterteilt wird. Erst bei einem Starkregenereignis tritt Wasser durch die Perforationen der Trennwand von dem ersten Bereich in den zweiten Bereich ein, wobei in dem Wasser mitgeführte Feststoffe bis zu einer den Perforationen der Trennwand entsprechenden Größe zurückgehalten werden. Darüber hinaus seien die Dokumente EP-A-2405063 und DE-U-202005005946 erwähnt.

Die bekannten Abwasserbehandlungsanordnungen haben ihre Funktionsfähigkeit in der Praxis mehrfach beeindruckend bestätigt. Lediglich bei sehr langen Abwasserbehandlungsstrecken hat sich eine gewisse Abnahme ihres Langzeit-Rückhaltevermögens gezeigt.
Es ist daher Aufgabe der vorliegenden Erfindung, das Langzeit-Rückhaltevermögen langer gattungsgemäßer Abwasserbehandlungsanordnungen zu verbessern.
Gelöst wird diese Aufgabe erfindungsgemäß durch eine Abwasserbehandlungsanordnung der gattungsgemäßen Art, bei welcher das Verhältnis der Länge des Abwasserbehandlungsrohrs zu dessen Innendurchmesser einen Wert von 20 überschreitet, und bei welcher bei wenigstens einem Teil der Durchtrittskanäle, vorzugsweise bei mehr als der Hälfte der Durchtrittskanäle, noch bevorzugter bei allen Durchtrittskanälen, das Verhältnis der Länge des jeweils betrachteten Durchtrittskanals zum Innendurchmesser des Abwasserbehandlungsrohrs einen Wert von mindestens 0,075 aufweist, vorzugsweise einen Wert von mindestens 0,100.
Unter der "Länge" der Durchtrittskanäle wird jene Richtung verstanden, die die beiden Mündungsöffnungen des jeweiligen Durchtrittskanals an der dem Strömungsraum zugewandten Oberfläche der Strömungstrennwand bzw. der dem Sammelraum zugewandten Oberfläche der Strömungstrennwand miteinander verbindet. Bei einem zwischen diesen beiden Oberflächen orthogonal verlaufenden Durchtrittskanal ist seine Länge somit gleich der Dicke der Strömungstrennwand.
Falls das zwischen einem Startschacht und einem Zielschacht angeordnete Abwasserbehandlungsrohr aus einer Mehrzahl von gesondert ausgebildeten, hintereinander angeordneten Abwasserbehandlungsrohrabschnitten gebildet ist, wird unter der "Länge" des Abwasserbehandlungsrohrs die Summe der Längen der einzelnen Abwasserbehandlungsrohrabschnitte verstanden.

Überraschenderweise hat sich gezeigt, dass bereits die bloße Erhöhung der Dicke der Strömungstrennwand und die damit einhergehende Verlängerung der Durchtrittskanäle gemäß der erfindungsgemäßen Bemessungsvorschrift auch bei langen Abwasserbehandlungsrohren zu einer deutlichen Verbesserung der Strömungstrennung von Strömungsraum und Sammelraum führt. Die verbesserte Strömungstrennung führt dazu, dass auch bei langen Abwasserbehandlungsrohren der Sammelraum strömungsberuhigt bleibt, so dass die abgelagerten Schmutzfrachten in ihm zurückgehalten werden.

An dieser Stelle sei darauf hingewiesen, dass die Erfindung nachstehend der einfacheren Darstellung halber lediglich für den Fall erläutert wird, dass der Sammelraum ein Sedimentsammelraum ist. Gleichwohl gelten sämtliche Ausführungen in analoger Weise auch für den Fall, dass der Sammelraum ein Leichtflüssigkeitssammelraum ist.

In Weiterbildung der Erfindung wird vorgeschlagen, dass bei wenigstens einem Teil der Durchtrittskanäle, vorzugsweise bei mehr als der Hälfte der Durchtrittskanäle, noch bevorzugter bei allen Durchtrittskanälen, die größte in Längsrichtung des Abwasserbehandlungsrohrs genommene Abmessung der Mündungsöffnung an der dem Strömungsraum zugewandten Oberfläche der Strömungstrennwand kleiner ist als die Länge des jeweils betrachteten Durchtrittskanals, vorzugsweise kleiner ist als die Hälfte der Länge des jeweils betrachteten Durchtrittskanals, noch bevorzugter kleiner ist als ein Drittel der Länge des jeweils betrachteten Durchtrittskanals. Obgleich die die Wirksamkeit der erfindungsgemäßen Bemessungsregel begründenden Effekte nicht abschließend untersucht worden sind, könnte einer dieser Effekte darin bestehen, dass im Strömungsraum der Oberfläche der Strömungstrennwand benachbart vorhandene turbulente Strömungsanteile in den Durchtrittskanälen derart geschwächt werden, dass sie das im Sammelraum abgesetzte nicht wieder aufwirbeln können. Diese Schwächungswirkung kann durch die Beachtung der vorstehend genannten weiteren Bemessungsregel unterstützt werden.

Um das Eindringen von turbulenten Strömungsanteilen aus dem Strömungsraum in die Durchtrittskanäle der Strömungstrennwand und von dort aus weiter in den Sammelraum erschweren zu können, kann bei wenigstens einem Teil der Durchtrittskanäle, vorzugsweise bei mehr als der Hälfte der Durchtrittskanäle, noch bevorzugter bei allen Durchtrittskanälen, zumindest die sich quer zur Längsrichtung des Abwasserbehandlungsrohrs erstreckende, stromaufwärtige Begrenzungskante der Mündungsöffnung an der dem Strömungsraum zugewandten Oberfläche der Strömungstrennwand einen Schrägflächenabschnitt aufweist, der dem durch das Abwasserbehandlungsrohr strömenden Abwasser eine von der Strömungstrennwand weg und in den zugeordneten Strömungsraum hinein gerichtete Strömungskomponente verleiht. Dabei braucht dieser Schrägflächenabschnitt kein planer Flächenabschnitt zu sein, sondern er kann auch gekrümmt verlaufen. Ferner kann sich der Schrägflächenabschnitt zumindest teilweise über die Mündungsöffnung erstrecken.

Zusätzlich oder alternativ kann bei wenigstens einem Teil der Durchtrittskanäle, vorzugsweise bei mehr als der Hälfte der Durchtrittskanäle, noch bevorzugter bei allen Durchtrittskanälen, zumindest die sich quer zur Längsrichtung des Abwasserbehandlungsrohrs erstreckende, stromaufwärtige Begrenzungskante der Mündungsöffnung an der dem Strömungsraum zugewandten Oberfläche der Strömungstrennwand im Sinne einer Erhöhung des laminaren Charakters der sich von der Begrenzungskante lösenden Strömung gestaltet sein. Durch diese strömungstechnisch vorteilhafte Gestaltung der stromaufwärtigen Begrenzungskante wird der laminare Charakter der der Oberfläche der Strömungstrennwand benachbarten Strömungsanteile erhöht und damit das Risiko vermindert, dass turbulente Strömungsanteile durch die Durchtrittskanäle bis zum Boden des Sammelraums gelangen und dort das abgelagerte Sediment wieder aufwirbeln können. Als Vergleichsmaßstab wird im Zusammenhang mit der vorliegenden Erfindung das Lösen der Strömung von einer Begrenzungskante mit einem Rechtecksprofil herangezogen.

Um die Auswirkungen turbulenter Strömungsanteile, die in die Durchtrittskanäle eingetreten sind, auf das abgelagerte Sediment weiter schwächen zu können, wird in Weiterbildung der Erfindung vorgeschlagen, dass wenigstens ein Teil der Durchtrittskanäle, vorzugsweise mehr als die Hälfte der Durchtrittskanäle, noch bevorzugter alle Durchtrittskanäle, einen Längenabschnitt aufweist, der in Richtung von der dem Strömungsraum zugewandten Oberfläche der Strömungstrennwand zu der dem Sammelraum zugewandten Oberfläche der Strömungstrennwand gesehen eine Erstreckungskomponente aufweist, die entgegen der Strömungsrichtung des Abwassers im Strömungsraum verläuft. Dabei kann der wenigstens eine Durchtrittskanal im Wesentlichen geradlinig entgegen der Strömungsrichtung im Strömungsraum verlaufen. Grundsätzlich sind aber auch gewinkelte oder gekrümmte Verläufe denkbar.

In Weiterbildung der Erfindung wird ferner vorgeschlagen, dass bei wenigstens einem Teil der Durchtrittskanäle, vorzugsweise bei mehr als der Hälfte der Durchtrittskanäle, noch bevorzugter bei allen Durchtrittskanälen, zumindest an der sich quer zur Längsrichtung des Abwasserbehandlungsrohrs erstreckenden, stromaufwärtigen Begrenzungskante der Mündungsöffnung an der dem Strömungsraum zugewandten Oberfläche der Strömungstrennwand ein flexibles Element angebracht ist. Dabei kann das flexible Element beispielsweise von einer mit der stromaufwärtigen Begrenzungskante verbundenen gummielastischen Lasche gebildet sein. Vorzugsweise steht das flexible Element bei im Abwasserbehandlungsrohr stehendem Abwasser im Wesentlichen orthogonal von der Strömungstrennwand ab und ragt in den Strömungsraum hinein. Diese Weiterbildung basiert auf der Erkenntnis, dass auch Starkregenereignisse üblicherweise mit einer geringen Niederschlagsrate, d.h. Niederschlagsmenge pro Zeiteinheit, beginnen und die Niederschlagsrate erst später zu jener eines Starkregenereignisses ansteigt. Die hohen Schmutzfrachten, die es zu sedimentieren und später zurückzuhalten gilt, fallen dabei überwiegend noch während der Phase geringer Niederschlagsrate an. Während dieser Phase geringer Niederschlagsrate ist aber auch die Strömungsgeschwindigkeit im Abwasserbehandlungsrohr geringer, so dass das Niederschlagswasser einen höheren Anteil laminarer Strömung aufweist, was das Sedimentieren begünstigt. Während dieser Phase bleibt das flexible Element im Wesentlichen unverformt und steht vorzugsweise im Wesentlichen orthogonal von der Strömungstrennwand ab. Nimmt die Strömungsgeschwindigkeit im Abwasserbehandlungsrohr zu, so wird das flexible Element von der Strömung ausgelenkt, wobei es quasi eine Schrägfläche bildet, welche der Strömung eine Bewegungskomponente in den Strömungsraum hinein verleiht. Hierdurch werden vor allem auch turbulente Strömungsanteile von den Durchtrittskanälen der Strömungstrennwand abgehalten. Bei sehr starker Strömung kann es sogar vorkommen, dass sich das flexible Element im Wesentlichen vollständig umlegt und die Mündungsöffnung des ihm zugeordneten Durchtrittskanals zumindest teilweise, vorzugsweise sogar vollständig, verschließt, wobei es zu letzterem nur eine Länge aufzuweisen braucht, die wenigstens gleich der Weite der Mündungsöffnung des Durchtrittskanals in Strömungsrichtung des Abwassres ist. Zwar kann in diesem Zustand keine Sedimentation mehr stattfinden; dies ist aber akzeptabel, weil der Schmutzfrachtanteil in dieser Phase des Starkregenereignisses gering ist. Zudem überwiegt der Vorteil, dass das Aufwirbeln von abgelagertem Sediment durch die verschlossenen Durchtrittskanäle zuverlässig verhindert werden kann. Nimmt die Strömungsgeschwindigkeit wieder ab, so kann sich das flexible Element aufgrund seiner Eigenelastizität oder unter der Vorspannung gesonderter Federmittel selbsttätig wieder aufrichten.

Um das Zusetzen der Durchtrittskanäle mit zu sedimentierenden Stoffen verhindern zu können, kann ferner vorgesehen sein, dass die größte in Längsrichtung des Abwasserbehandlungsrohrs genommene Abmessung der Mündungsöffnung an der dem Strömungsraum zugewandten Oberfläche der Strömungstrennwand einen Wert von wenigstens 1,0 cm, vorzugsweise wenigstens 1,5 cm, noch bevorzugter wenigstens 2,0 cm, aufweist.

Nachzutragen ist noch, dass sich die Wirksamkeit der erfindungsgemäßen Bemessungsregel insbesondere bei Abwasserbehandlungsstrecken von 12 m, 18 m und 24 m Länge erwiesen hat, beispielsweise bei Abwasserbehandlungsrohren von 500 mm oder 600 mm Durchmesser. Beispielsweise durch den zusätzlichen Einsatz der in den abhängigen Ansprüchen niedergelegten Ausführungsvarianten kann die Strömungstrennung zwischen Strömungsraum und Sammelraum weiter verbessert werden, so dass die Länge der Abwasserbehandlungsstrecke auch über 24 m hinaus ausgedehnt werden kann.

Unabhängig von der Bemessungsregel des Anspruchs 1 eignet sich eine Strömungstrennwand, welche gemäß einer der Konstruktionsvorschriften der Ansprüche 2 bis 8 ausgebildet ist, aber auch zur Nachrüstung herkömmlicher Regenklärbecken, da auch dort das Problem der Wiederaufwirbelung von abgelagertem Sediment bei Starkregenereignissen besteht. Insbesondere kann wenigstens eine derartige Strömungstrennwand in einem vorbestimmten Abstand vom Boden des Regenklärbeckens angeordnet werden, um das Volumen des Regenklärbeckens in einen oberhalb der wenigstens einen Strömungstrennwand angeordneten Strömungsraum und einen unterhalb der wenigstens einen Strömungstrennwand angeordneten Sammelraum zu unterteilen. Der vorbestimmte Abstand kann dabei beispielsweise bis zu 100 cm betragen, und vorzugsweise mindestens etwa 20 cm.

Als weitere Nachrüstmaßnahme kann das Volumen des Regenklärbeckens durch wenigstens eine, vorzugsweise wasserundurchlässige, Vertikaltrennwand in eine Mehrzahl von strömungstechnisch parallel angeordneten Teilbecken reduzierter Breite (in horizontaler Richtung und orthogonal zur Strömungsrichtung in dem Teilbecken genommene Abmessung) unterteilt werden, denen das zuströmende Abwasser über eine Verteileranordnung zugeführt wird. Durch diese weitere Nachrüstmaßnahme kann eine im Wesentlichen gleichmäßige Durchströmung des gesamten Regenwasserklärbeckens sichergestellt werden.

Nachzutragen ist noch, dass die Strömungstrennwand als Strömungstrenngitter ausgebildet sein kann, bei welchem die Durchtrittskanäle von den Gitterstegen voneinander getrennt sind.

Die Erfindung wird im Folgenden anhand der beigefügten Zeichnung an Ausführungsbeispielen näher erläutert werden. Es stellt dar:
- Figur 1: eine schematische, geschnittene Seitenansicht einer erfindungsgemäßen Abwasserbehandlungsanlage, welche sowohl zur Abscheidung von Sediment als auch zur Leichtflüssigkeitsabscheidung ausgebildet ist;
- Figur 2: einen schematischen Querschnitt durch ein Abwasserbehandlungsrohr, welches lediglich einen Strömungsraum und einen Sedimentationsraum umfasst;
- Figuren 3 bis 5: schematische Darstellungen verschiedener Verläufe von Durchtrittskanälen einer den Strömungsraum vom Sedimentationsraum bzw. dem Leichtflüssigkeitsabscheideraum trennenden Strömungstrennwand; und
- Figuren 6 bis 9: schematische Darstellungen verschiedener Ausbildungen der dem Strömungsraum zugewandten Abschlusskanten der die Durchtrittskanäle voneinander trennenden Stege.

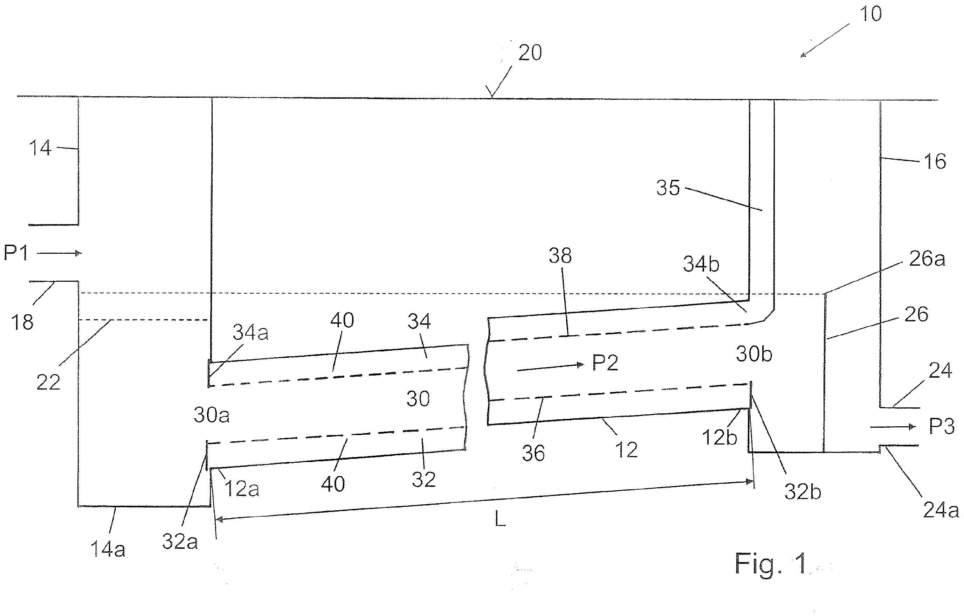

In Figur 1 ist eine erfindungsgemäße Abwasserbehandlungsanlage ganz allgemein mit 10 bezeichnet. Sie umfasst ein Abwasserbehandlungsrohr 12, das zwischen einem im Wesentlichen vertikal verlaufenden Startschacht 14 und einem ebenfalls im Wesentlichen vertikal verlaufenden Zielschacht 16 angeordnet ist.

In den Startschacht 14 mündet ein Zulauf 18, durch den Abwasser, beispielsweise Regenwasser, das auf einer versiegelten Oberfläche 20, beispielsweise einer Straße, einem Parkplatz oder dergleichen, niedergegangen ist, in den Startschacht 14 eingeleitet wird (Pfeil P1). Vor der Einleitung in den Startschacht 14 kann das Abwasser bereits einer ersten Reinigung unterzogen worden sein, welche grobe Schmutzfrachtanteile, beispielsweise Laub und dergleichen, abgefangen hat. Diese erste Reinigung kann beispielsweise mittels eines (nicht dargestellten) Siebeimers oder einer ähnlichen Filtrationsvorrichtung bewerkstelligt werden. In dem Startschacht 14 ist ferner eine Prallplatte 22 vorgesehen, mittels derer die Strömung des Abwassers vergleichmäßigt werden kann, so dass das Wasser im Wesentlichen turbulenzfrei und mehr oder weniger laminar strömend in das Abwasserbehandlungsrohr 12 eingeleitet werden kann. Zusätzlich oder alternativ zu der Prallplatte 22 kann auch ein (nicht dargestellter) Diffusor vorgesehen sein, der unmittelbar vor dem Eintrittsende 12a des Abwasserbehandlungsrohrs 12 in im Wesentlichen vertikaler Orientierung angeordnet und ebenfalls dazu bestimmt ist, die Strömung des Abwassers im Abwasserbehandlungsrohr 12 zu vergleichmäßigen.

Vom Zielschacht 16 geht ein Ablauf 24 aus, durch den das im Abwasserbehandlungsrohr 12 einer weiteren Reinigung unterzogene Abwasser beispielsweise einer (nicht dargestellten) Rigolenanordnung zugeführt werden kann (Pfeil P3), welche der Versickerung des Abwassers im Erdreich dient. In dem Zielschacht 16 kann eine Überströmwand 26 vorgesehen sein, welche sicherstellt, dass das Abwasserbehandlungsrohr 12 im Dauerstau betrieben werden kann, d.h. dass das Abwasserbehandlungsrohr 12 auch in niederschlagsfreien Zeiten nicht trocken fällt. Die Dauerstaulinie ist in Figur 1 mittels einer vom oberen Ende 26a der Überströmwand 26 ausgehenden gestrichelten Linie dargestellt. Zwischen der Überströmwand 26 und dem Ablauf 24 können gewünschtenfalls auch noch weitere (nicht dargestellte) Reinigungsvorrichtungen, beispielsweise Filtrationsstufen oder dergleichen, vorgesehen sein.

Sollten derartige zusätzliche Reinigungsvorrichtungen nicht erforderlich sein, so könnte die untere Kante 24a des Abflusses 24 auch auf Höhe des oberen Endes 26a der Überströmwand 26 angeordnet sein, um den Dauerstau im Abwasserbehandlungsrohr 12 sicherzustellen. Die Überströmwand 26 bräuchte in diesem Fall dann nicht vorgesehen zu werden.

Wie in Figur 1 ferner dargestellt ist, ist das Abwasserbehandlungsrohr 12 von seinem in Figur 1 linken, mit dem Startschacht 14 verbundenen Ende 12a zu seinem in Figur 1 rechten, mit dem Zielschacht 16 verbundenen Ende 12b hin ansteigend, d.h. in Strömungsrichtung des Abwassers (Pfeil P2) mit einem Gegengefälle, angeordnet. Dieses Gegengefälle unterstützt in Verbindung mit der vorstehend angesprochenen turbulenzarmen Strömung die Sedimentation von in dem Abwasser mitgeführten Schmutzfrachten, insbesondere Feststoffen, oder/und die Abscheidung von Leichtflüssigkeiten, beispielsweise Öl, Benzin oder dergleichen. Zudem erleichtert bzw. ermöglicht dieses Gegengefälle das Entfernen bzw. Entsorgen der angesammelten Fremdstoffe an den Tief- bzw. Hochpunkten der Abwasserbehandlungsanlage 10 bzw. in den Schächten 14 und/oder 16.

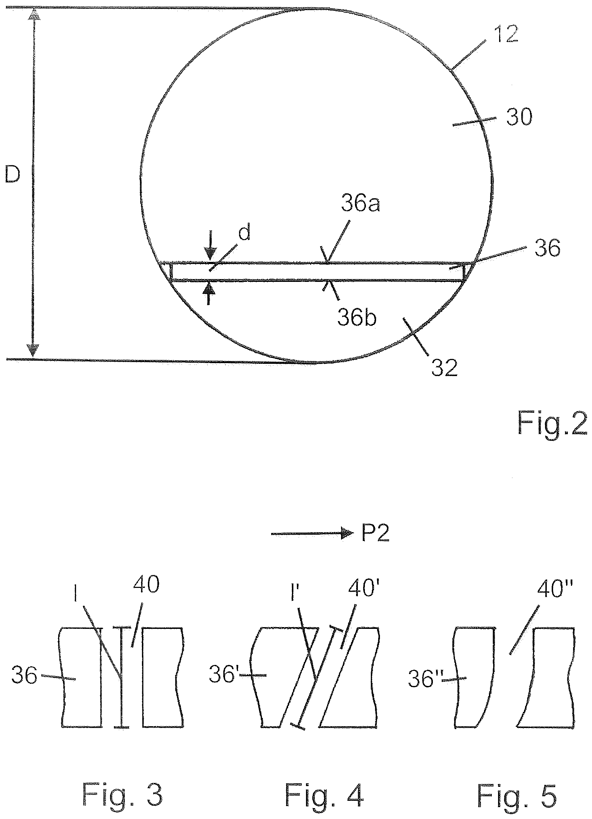

Damit die sich ablagernden Schmutzfrachten nicht zu einer Einengung seines strömungsaktiven Querschnitts führen, ist das erfindungsgemäße Abwasserbehandlungsrohr 12 im dargestellten Ausführungsbeispiel in drei Räume unterteilt, nämlich einen Strömungsraum 30, einen Sedimentationsraum 32 und einen Leichtflüssigkeitsabscheideraum 34. In Abhängigkeit vom jeweiligen Anwendungsfall kann es aber auch nur einen Strömungsraum 30 und einen Sedimentationsraum 32 (siehe Figur 2) oder nur einen Strömungsraum und einen Leichtflüssigkeitsabscheideraum (vgl. EP 2 226 106 A1) aufweisen. Der Strömungsraum 30 steht mit dem Sedimentationsraum 32 und dem Leichtflüssigkeitsabscheideraum 34 über in Figur 1 gestrichelt angedeutete Strömungstrennwände 36 und 38 in Verbindung, von denen jede eine Mehrzahl von Durchtrittskanälen 40 aufweist. Auf die Ausgestaltung dieser Durchtrittskanäle 40 wird nachfolgend noch detailliert eingegangen werden.

Im Unterschied zum Strömungsraum 30, der im Bereich der beiden Längsenden 12a, 12b des Abwasserbehandlungsrohrs 12 über Durchtrittsöffnungen 30a, 30b mit den Schächten 14, 16 verbunden ist, sind die entsprechenden Öffnungen 32a, 32b des Sedimentationsraums 32 und 34a des Leichtflüssigkeitsabscheideraums 34 im normalen Abwasserbehandlungsbetrieb verschlossen, so dass der Sedimentationsraum 32 und der Leichtflüssigkeitsabscheideraum 34 im normalen Betrieb nicht von Abwasser durchströmt bzw. angeströmt werden, was die Sedimentation bzw. Leichtflüssigkeitsabscheidung unterstützt. Dabei sind die Öffnungen 32b und 34a permanent verschlossen. Die Öffnung 32a kann hingegen mittels einer Klappe verschlossen sein, die zur Wartung bzw. Reinigung geöffnet werden kann bzw. sich beim Rückspülen selbsttätig öffnet, so dass das abgelagerte Sediment bzw. aufgefangene Leichtflüssigkeit mittels eines üblichen Reinigungsgeräts, beispielsweise einem Hochdruck-Spülschlauch, herausgespült werden kann. Das Reinigungsgerät kann dabei von der Oberfläche 20 her über den Startschacht 14 oder/und den Zielschacht 16 vorzugsweise in den Strömungsraum 30 eingeführt werden. Das aus dem Sedimentationsraum 32 herausgespülte Sediment kann aufgrund des Gegengefälles zum Startschacht 14 hin abfließen und sich an dessen Boden 14a sammeln, der in diesem Fall als Sediment-Auffangbehälter dient. Aus diesem Sediment-Auffangbehälter kann das Sediment dann in herkömmlicher Weise abgepumpt werden. Nach Verschließen bzw. dem selbsttägigen Schließen der Klappe ist der Sedimentationsraum 32 für einen weiteren Betriebszyklus vorbereitet. Schließlich ist die Öffnung 34b mit einem Tauchrohr 35 verbunden, in dem sich abgeschiedene Leichtflüssigkeit ansammeln kann und aus dem die angesammelte Leichtflüssigkeit von der Oberfläche 20 her abgepumpt werden kann. Alternativ kann der Zielschacht 16 auch doppelwandig ausgebildet sein, wobei die Funktion des Tauchrohrs 35 von dem Zwischenraum zwischen den beiden Wandungen des Zielschachts 16 übernommen wird.

In Figur 2 ist eine Querschnittsansicht einer Ausführungsform eines Abwasserbehandlungsrohrs 12 dargestellt, dessen Innenraum von einer Strömungstrennwand 36 lediglich in einen Strömungsraum 30 und einen Sedimentationsraum 32 unterteilt ist. Es sei an dieser Stelle aber betont, dass die nachstehenden Ausführungen zur Gestaltung der Strömungstrennwand 36 und insbesondere von deren Durchtrittskanälen 40 in gleicher Weise auch auf die Durchtrittskanäle der Strömungstrennwand 38 zwischen dem Strömungsraum 30 und dem Flüssigkeitsabscheideraum 34 zutreffen.

Verlaufen die Durchtrittskanäle 40 im Wesentlichen orthogonal zwischen der an den Strömungsraum 30 angrenzenden Oberfläche 36a der Strömungstrennwand 36 und der an den Sedimentationsraum 32 angrenzenden Oberfläche 36b der Strömungstrennwand 36, wie dies in Figur 3 dargestellt ist, so ist die Länge I der Durchtrittskanäle 40 (siehe Figur 3) gleich der Dicke d der Strömungstrennwand 36 (siehe Figur 2).

Je länger die Durchtrittskanäle 40 sind, desto geringer ist die Gefahr, dass sich im Strömungsraum 30 etwaig doch vorhandene Turbulenzen bis in den Sedimentationsraum 32 hinein auswirken und dort das abgelagerte Sediment wieder aufwirbeln können. Der Erfindung liegt in diesem Zusammenhang die Erkenntnis zugrunde, dass diese Problematik bei kurzen Abwasserbehandlungsrohren praktisch nicht besteht und erst bei Abwasserbehandlungsrohren auftritt, deren Länge L (siehe Figur 1) mehr als das 20-fache von ihrem Innendurchmesser D (siehe Figur 2) beträgt. Für diese langen Abwasserbehandlungsrohre fordert die erfindungsgemäße Bemessungsregel, dass die Länge I der Durchtrittskanäle mindestens das 0,075-fache, vorzugsweise mindestens das 0,100-fache des Innendurchmessers D des Abwasserbehandlungsrohrs 12 beträgt.

Um die Länge der Durchtrittskanäle erhöhen zu können, ist es in Abwandlung der Ausführungsform gemäß Figur 3 auch denkbar, dass die Durchtrittskanäle 40' die Strömungstrennwand 36' schräg durchsetzen, wie dies in Figur 4 dargestellt ist. Sind die Durchtrittskanäle 40' zudem in der Durchtrittsrichtung vom Strömungsraum 30 zum Sedimentationsraum 32 hin entgegen der Strömungsrichtung P2 des Abwassers schräg geneigt, so verringert dies zusätzlich das Risiko, dass sich im Strömungsraum etwaig doch vorhandene Turbulenzen bis in den Sedimentationsraum hinein auswirken.

Die Ausführungsform gemäß Figur 5 soll ferner verdeutlichen, dass auch zumindest abschnittsweise gekrümmt ausgebildete Verläufe von Durchtrittskanälen 40" durch die Strömungstrennwand 36" hindurch denkbar sind.

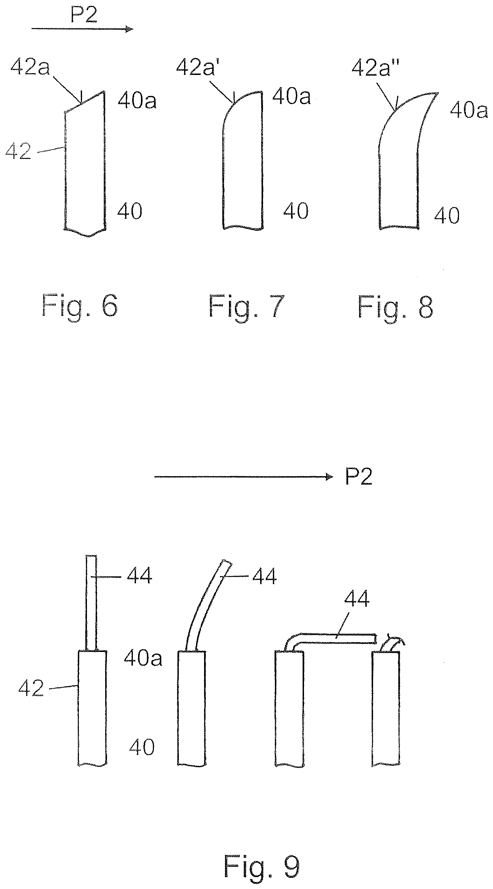

Ferner soll anhand der Ausführungsformen der Figuren 6 bis 9 deutlich gemacht werden, dass auch die Gestaltung der dem Strömungsraum 30 zugewandten Begrenzungskanten dazu beitragen kann, das Risiko zu senken, dass sich im Strömungsraum etwaig doch vorhandene Turbulenzen bis in den Sedimentationsraum hinein auswirken. Obgleich die Ausführungsformen der Figuren 6 bis 9 anhand der Begrenzungsflächen der die Durchtrittskanäle begrenzenden Wandungen allesamt Durchtrittskanäle 40 zeigen, die die Strömungstrennwand 36 im Wesentlichen orthogonal durchsetzen (vgl. Figur 3), sei an dieser Stelle darauf hingewiesen, dass diese Gestaltungsmöglichkeiten in gleicher Weise auch bei den Verläufen der Figuren 4 und 5 bestehen.

Den Ausführungsformen gemäß Figuren 6 bis 8 ist dabei gemeinsam, dass die sich quer zur Strömungsrichtung P2 des Abwassers erstreckende, stromaufwärtige Begrenzungskante 42 der Mündungsöffnung 40a der Durchtrittskanäle 40 an der dem Strömungsraum 30 zugewandten Oberfläche 36a der Strömungstrennwand 36 einen Schrägflächenabschnitt 42a aufweist, der dem durch das Abwasserbehandlungsrohr strömenden Abwasser eine von der Strömungstrennwand 36 weg und in den zugeordneten Strömungsraum 30 hinein gerichtete Strömungskomponente verleiht. Sie unterscheiden sich jedoch hinsichtlich der Ausbildung dieser Schrägflächen. Während die Ausführungsform gemäß Figur 6 eine plane Schrägfläche 42a aufweist, sind die Schrägflächen 42a' und 42a" der Ausführungsformen der Figuren 7 und 8 zumindest abschnittsweise gekrümmt ausgebildet, und bei der Ausführungsformen der Figur 8 erstreckt sich der Schrägflächenabschnitt 42a" sogar zumindest teilweise über die Mündungsöffnung 40a.

Bei der Ausführungsform gemäß Figur 9 ist an der sich quer zur Längsrichtung des Abwasserbehandlungsrohrs 12 erstreckenden, stromaufwärtigen Begrenzungskante 42 der Mündungsöffnung 40a an der dem Strömungsraum 30 zugewandten Oberfläche 36a der Strömungstrennwand 36 ein flexibles Element 44 angebracht, das orthogonal zur Strömungsrichtung P2 in den Strömungsraum 30 hineinragt. Bei zunehmender Strömungsgeschwindigkeit des Abwassers in Strömungsraum wird das flexible Element 44 vom Abwasser zunehmend verformt, so dass es zunächst einen Schrägflächenabschnitt im Sinne der Ausführungsformen der Figuren 6 bis 8 bildet, und schließlich den ihm zugeordneten Durchtrittskanal im Wesentlichen vollständig verschließt, was den besten Schutz vor einem Wiederaufwirbeln von abgelagertem Sediment bietet.

## Patentansprüche

1. Abwasserbehandlungsanordnung (10) zum zumindest teilweisen Entfernen von Fremdstoffen, die eine von der spezifischen Dichte von Wasser abweichende spezifische Dichte aufweisen, aus Abwasser, insbesondere aus Regenwasser, umfassend wenigstens ein Abwasserbehandlungsrohr (12), welches aufweist:
• wenigstens einen Strömungsraum (30) mit wenigstens einer Einströmöffnung (30a) und wenigstens einer Ausströmöffnung (30b), wobei das Abwasser durch die wenigstens eine Einströmöffnung (30a) in den wenigstens einen Strömungsraum (30) eintritt und nach Durchströmen des wenigstens einen Strömungsraums (30) durch die wenigstens eine Ausströmöffnung (30b) aus dem wenigstens einen Strömungsraum (30) austritt; und
• wenigstens einen strömungsberuhigten Sammelraum (32, 34), in welchem sich die zu Boden sinkenden oder/und zur Decke steigenden Fremdstoffe ansammeln, wobei der Sammelraum (32, 34) von dem wenigstens einen Strömungsraum (30) über eine am Boden oder/und an der Decke des wenigstens einen Strömungsraums (30) vorgesehene Strömungstrennwand (36, 38) getrennt ist, in welcher eine Mehrzahl von über die Länge (L) des Abwasserbehandlungsrohrs (12) verteilt angeordneten Durchtrittskanälen (40) ausgebildet ist, die den Sammelraum (32, 34) mit dem wenigstens einen Strömungsraum (30) verbinden,
**dadurch gekennzeichnet, dass** das Verhältnis der Länge (L) des Abwasserbehandlungsrohrs (12) zu dessen Innendurchmesser (D) einen Wert von 20 überschreitet, und dass bei wenigstens einem Teil der Durchtrittskanäle (40), vorzugsweise bei mehr als der Hälfte der Durchtrittskanäle, noch bevorzugter bei allen Durchtrittskanälen, das Verhältnis der Länge (I) des jeweils betrachteten Durchtrittskanals (40) zum Innendurchmesser (D) des Abwasserbehandlungsrohrs (12) einen Wert von mindestens 0,075 aufweist, vorzugsweise einen Wert von mindestens 0,100.

2. Abwasserbehandlungsanordnung nach Anspruch 1,
**dadurch gekennzeichnet, dass** bei wenigstens einem Teil der Durchtrittskanäle (40), vorzugsweise bei mehr als der Hälfte der Durchtrittskanäle, noch bevorzugter bei allen Durchtrittskanälen, die größte in Strömungsrichtung (P2) des Abwassers genommene Abmessung (x) der Mündungsöffnung (40a) an der dem Strömungsraum (30) zugewandten Oberfläche (36a) der Strömungstrennwand (36) kleiner ist als die Länge (I) des jeweils betrachteten Durchtrittskanals (40), vorzugsweise kleiner ist als die Hälfte der Länge des jeweils betrachteten Durchtrittskanals, noch bevorzugter kleiner ist als ein Drittel der Länge des jeweils betrachteten Durchtrittskanals.

3. Abwasserbehandlungsanordnung nach Anspruch 1 oder 2,
**dadurch gekennzeichnet, dass** bei wenigstens einem Teil der Durchtrittskanäle (40), vorzugsweise bei mehr als der Hälfte der Durchtrittskanäle, noch bevorzugter bei allen Durchtrittskanälen, zumindest die sich quer zur Strömungsrichtung (P2) des Abwassers erstreckende, stromaufwärtige Begrenzungskante (42) der Mündungsöffnung (40a) an der dem Strömungsraum (30) zugewandten Oberfläche (36a) der Strömungstrennwand (36) einen Schrägflächenabschnitt (42a; 42a'; 42a") aufweist, der dem durch das Abwasserbehandlungsrohr (12) strömenden Abwasser eine von der Strömungstrennwand (36) weg und in den zugeordneten Strömungsraum (30) hinein gerichtete Strömungskomponente verleiht.

4. Abwasserbehandlungsanordnung nach Anspruch 3,
**dadurch gekennzeichnet, dass** sich der Schrägflächenabschnitt (42a") zumindest teilweise über die Mündungsöffnung (40a) erstreckt.

5. Abwasserbehandlungsanordnung nach einem der Ansprüche 1 bis 4,
**dadurch gekennzeichnet, dass** bei wenigstens einem Teil der Durchtrittskanäle (40), vorzugsweise bei mehr als der Hälfte der Durchtrittskanäle, noch bevorzugter bei allen Durchtrittskanälen, zumindest die sich quer zur Strömungsrichtung (P2) des Abwassers erstreckende, stromaufwärtige Begrenzungskante (42) der Mündungsöffnung (40a) an der dem Strömungsraum (30) zugewandten Oberfläche (36a) der Strömungstrennwand (36) im Sinne einer Erhöhung des laminaren Charakters der sich von der Begrenzungskante lösenden Strömung gestaltet ist (42a; 42a'; 42a").

6. Abwasserbehandlungsanordnung nach einem der Ansprüche 1 bis 5,
**dadurch gekennzeichnet,** das wenigstens ein Teil der Durchtrittskanäle (40'; 40"), vorzugsweise mehr als die Hälfte der Durchtrittskanäle, noch bevorzugter alle Durchtrittskanäle, einen Längenabschnitt aufweist, der in Richtung von der dem Strömungsraum (30) zugewandten Oberfläche (36a) der Strömungstrennwand (36) zu der dem Sammelraum (32, 34) zugewandten Oberfläche (36b) der Strömungstrennwand (36) gesehen eine Erstreckungskomponente aufweist, die entgegen der Strömungsrichtung (P2) des Abwassers im Strömungsraum (30) verläuft.

7. Abwasserbehandlungsanordnung nach einem der Ansprüche 1 bis 6,
**dadurch gekennzeichnet, dass** bei wenigstens einem Teil der Durchtrittskanäle (40), vorzugsweise bei mehr als der Hälfte der Durchtrittskanäle, noch bevorzugter bei allen Durchtrittskanälen, zumindest an der sich quer zur Strömungsrichtung (P2) des Abwassers erstreckenden, stromaufwärtigen Begrenzungskante (42) der Mündungsöffnung (40a) an der dem Strömungsraum (30) zugewandten Oberfläche (36a) der Strömungstrennwand (36) ein flexibles Element (44) angebracht ist.

8. Abwasserbehandlungsanordnung nach einem der Ansprüche 1 bis 7,
**dadurch gekennzeichnet, dass** die größte in Strömungsrichtung (P2) des Abwassers genommene Abmessung (x) der Mündungsöffnung (40a) an der dem Strömungsraum (30) zugewandten Oberfläche (36a) der Strömungstrennwand (36) einen Wert von wenigstens 1,0 cm, vorzugsweise wenigstens 1,5 cm, noch bevorzugter wenigstens 2,0 cm, aufweist.

## Claims

1. Wastewater treatment assembly (10) for at least partially removing impurities from wastewater, in particular from rainwater, which impurities have a specific density that differs from the specific density of water, said assembly comprising at least one wastewater treatment pipe (12) that has:
• at least one flow chamber (30) having at least one inflow opening (30a) and at least one outflow opening (30b), the wastewater entering the at least one flow chamber (30) through the at least one inflow opening (30a) and, after flowing through the at least one flow chamber (30), exiting the at least one flow chamber (30) through the at least one outflow opening (30b); and
• at least one flow-stabilised collecting chamber (32, 34), in which the impurities sinking to the bottom and/or rising to the top collect, the collecting chamber (32, 34) being separated from the at least one flow chamber (30) by means of a flow partition (36, 38) provided at the bottom and/or at the top of the at least one flow chamber (30), in which flow partition a plurality of through-channels (40) are formed so as to be distributed over the length (L) of the wastewater treatment pipe (12), which through-channels connect the collecting chamber (32, 34) to the at least one flow chamber (30),
**characterised in that** the ratio between the length (L) of the wastewater treatment pipe (12) and the internal diameter (D) thereof exceeds a value of 20, and **in that** for at least some of the through-channels (40), preferably for more than half the through-channels, more preferably for all the through-channels, the ratio between the length (I) of the through-channel (40) considered in each case and the internal diameter (D) of the wastewater treatment pipe (12) has a value of at least 0.075, preferably a value of at least 0.100.

2. Wastewater treatment assembly according to claim 1, **characterised in that** for at least some of the through-channels (40), preferably for more than half of the through-channels, more preferably for all the through-channels, the largest measurement (x), taken in the flow direction (P2) of the wastewater, of the discharge opening (40a) in the surface (36a) of the flow partition (36) that faces the flow chamber (30) is smaller than the length (I) of the through-channel (40) considered in each case, preferably is smaller than half the length of the through-channel considered in each case, more preferably is smaller than a third of the length of the through-channel considered in each case.

3. Wastewater treatment assembly according to either claim 1 or claim 2, **characterised in that** for at least some of the through-channels (40), preferably for more than half of the through-channels, more preferably for all the through-channels, at least the upstream terminating rim (42) of the discharge opening (40a), which terminating rim extends transversely to the flow direction (P2) of the wastewater, has an oblique face portion (42a; 42a'; 42") on the surface (36a) of the flow partition (36) that faces the flow chamber (30), which oblique face portion provides the wastewater flowing through the wastewater treatment pipe (12) with a flow component that points away from the flow partition (36) and points into the associated flow chamber (30).

4. Wastewater treatment assembly according to claim 3, **characterised in that** the oblique face portion (42a") extends at least partially beyond the discharge opening (40a).

5. Wastewater treatment assembly according to any of claims 1 to 4, **characterised in that** for at least some of the through-channels (40), preferably for more than half of the through-channels, more preferably for all the through-channels, at least the upstream terminating rim (42) of the discharge opening (40a), which terminating rim extends transversely to the flow direction (P2) of the wastewater, is formed (42a; 42a'; 42") on the surface (36a) of the flow partition (36) that faces the flow chamber (30) in order to increase the laminar character of the flow coming from the terminating rim.

6. Wastewater treatment assembly according to any of claims 1 to 5, **characterised in that** at least some of the through-channels (40), preferably more than half of the through-channels, more preferably all the through-channels, has/have a longitudinal portion that, when viewed in the direction from the surface (36a) of the flow partition (36) that faces the flow chamber (30) to the surface (36b) of the flow partition (36) that faces the collecting chamber (32, 34), has an extension component (36b) that extends counter to the flow direction (P2) of the wastewater in the flow chamber (30).

7. Wastewater treatment assembly according to any of claims 1 to 6, **characterised in that** for at least some of the through-channels (40), preferably for more than half of the through-channels, more preferably for all the through-channels, a flexible element (44) is attached to the upstream terminating rim (42) of the discharge opening (40a), which terminating rim extends transversely to the flow direction (P2) of the wastewater, in the surface (36a) of the flow partition (36) that faces the flow chamber (30).

8. Wastewater treatment assembly according to any of claims 1 to 7, **characterised in that** the largest measurement (x), taken in the flow direction (P2) of the wastewater, of the discharge opening (40a) in the surface (36a) of the flow partition (36) that faces the flow chamber (30) has a value of at least 1.0 cm, preferably 1.5 cm, more preferably 2.0 cm.

## Revendications

1. Système de traitement des eaux usées (10) pour l'élimination au moins partielle de substances étrangères, qui présentent une densité spécifique divergeant de la densité spécifique de l'eau, des eaux usées, en particulier de l'eau de pluie, comprenant au moins un tube de traitement des eaux usées (12), lequel présente :
- au moins un espace d'écoulement (30) avec au moins une ouverture d'admission (30a) et au moins une ouverture d'évacuation (30b), les eaux usées entrant par l'au moins une ouverture d'admission (30a) dans l'au moins un espace d'écoulement (30) et sortant après l'écoulement dans l'au moins un espace d'écoulement (30) par l'au moins une ouverture d'évacuation (30b) de l'au moins un espace d'écoulement (30) ; et
- au moins un espace de collecte à écoulement calme (32, 34), dans lequel des substances étrangères descendant vers le fond et/ou montant vers le plafond s'accumulent, sachant que l'espace de collecte (32, 34) est séparé de l'au moins un espace d'écoulement (30) par le biais d'une cloison de séparation d'écoulement (36, 38) qui est prévue au niveau du fond et/ou au niveau du plafond de l'au moins un espace d'écoulement (30), et sur laquelle est réalisée une pluralité de canaux de passage (40) répartis sur la longueur (L) du tube de traitement des eaux usées (12), qui relient l'espace de collecte (32, 34) à l'au moins un espace d'écoulement (30), **caractérisé en ce que** le rapport entre la longueur (L) du tube de traitement des eaux usées (12) et son diamètre intérieur (D) dépasse une valeur de 20, et que pour au moins une partie des canaux de passage (40), de préférence pour plus de la moitié des canaux de passage, de manière encore davantage préférée pour tous les canaux de passage, le rapport entre la longueur (1) du canal de passage (40) respectivement considéré et le diamètre intérieur (D) du tube de traitement des eaux usées (12) présente une valeur d'au moins 0,075, de préférence une valeur d'au moins 0,100.

2. Système de traitement des eaux usées selon la revendication 1,
**caractérisé en ce que** pour au moins une partie des canaux de passage (40), de préférence pour plus de la moitié des canaux de passage, de manière encore davantage préférée pour tous les canaux de passage, la plus grande dimension (x) de l'embouchure (40a) prise dans la direction d'écoulement (P2) des eaux usées au niveau de la surface (36a) de la cloison de séparation d'écoulement (36) tournée vers l'espace d'écoulement (30) est inférieure à la longueur (1) du canal de passage (40) respectivement considéré, de préférence est inférieure à la moitié de la longueur du canal de passage respectivement considéré, de manière encore davantage préférée est inférieure à un tiers de la longueur du canal de passage respectivement considéré.

3. Système de traitement des eaux usées selon la revendication 1 ou 2,
**caractérisé en ce que** pour au moins une partie des canaux de passage (40), de préférence pour plus de la moitié des canaux de passage, de manière encore davantage préférée pour tous les canaux de passage, au moins l'arête de limitation (42) en amont s'étendant transversalement à la direction d'écoulement (P2) des eaux usées de l'embouchure (40a) au niveau de la surface (36a) de la cloison de séparation d'écoulement (36) tournée vers l'espace d'écoulement (30) présente une section de surface inclinée (42a ; 42a' ; 42a"), qui confère aux eaux usées s'écoulant à travers le tube de traitement des eaux usées (12) une composante d'écoulement s'éloignant de la cloison de séparation d'écoulement (36) et dirigée dans l'espace d'écoulement (30) associé.

4. Système de traitement des eaux usées selon la revendication 3,
**caractérisé en ce que** la section de surface inclinée (42a") s'étend au moins en partie au-dessus de l'embouchure (40a).

5. Système de traitement des eaux usées selon l'une quelconque des revendications 1 à 4,
**caractérisé en ce que** pour au moins une partie des canaux de passage (40), de préférence pour plus de la moitié des canaux de passage, de manière encore davantage préférée pour tous les canaux de passage, au moins l'arête de limitation (42) en amont s'étendant transversalement à la direction d'écoulement (P2) des eaux usées de l'embouchure (40a) au niveau de la surface (36a) de la cloison de séparation d'écoulement (36) tournée vers l'espace d'écoulement (30) est conçue dans le sens d'une augmentation du caractère laminaire de l'écoulement se détachant de l'arête de limitation (42a ; 42a' ; 42a").

6. Système de traitement des eaux usées selon l'une quelconque des revendications 1 à 5,
**caractérisé en ce qu'**au moins une partie des canaux de passage (40' ; 40"), de préférence plus de la moitié des canaux de passage, de manière encore davantage préférée tous les canaux de passage, présente une section de longueur, qui présente vue dans la direction de la surface (36a) de la cloison de séparation d'écoulement (36) tournée vers l'espace d'écoulement (30) vers la surface (36b) de la cloison de séparation d'écoulement (36) tournée vers l'espace de collecte (32, 34), une composante d'extension qui s'étend dans le sens opposé à la direction d'écoulement (P2) des eaux usées dans l'espace d'écoulement (30).

7. Système de traitement des eaux usées selon l'une quelconque des revendications 1 à 6,
**caractérisé en ce que** pour au moins une partie des canaux de passage (40), de préférence pour plus de la moitié des canaux de passage, de manière encore davantage préférée pour tous les canaux de passage, un élément flexible (44) est monté au moins au niveau de l'arête de limitation (42) en amont s'étendant transversalement à la direction d'écoulement (P2) des eaux usées de l'embouchure (40a) au niveau de la surface (36a) de la cloison de séparation d'écoulement (36) tournée vers l'espace d'écoulement (30).

8. Système de traitement des eaux usées selon l'une quelconque des revendications 1 à 7,
**caractérisé en ce que** la plus grande dimension (x) de l'embouchure (40a) prise dans la direction d'écoulement (P2) des eaux usées au niveau de la surface (36a) de la cloison de séparation d'écoulement (36) tournée vers l'espace d'écoulement (30) présente une valeur d'au moins 1,0 cm, de préférence d'au moins 1,5 cm, de manière encore davantage préférée d'au moins 2,0 cm.
